# EUROPÄISCHE PATENTSCHRIFT

(11) **EP 2 210 023 B1**
(45) Veröffentlichungstag und Bekanntmachung des Hinweises auf die Patenterteilung: **14.03.2012**
(21) Anmeldenummer: 08840447.0
(22) Anmeldetag: 15.10.2008
(51) Int. Cl.: F16K 5/02, F16K 5/06, F16D 1/10, F16D 3/02

(54) **WELLENVERBINDUNG ZWISCHEN ZWEI WELLEN**
SHAFT CONNECTION BETWEEN TWO SHAFTS
LIAISON ENTRE DEUX ARBRES

(30) Priorität: 15.10.2007 DE 102007049579
(43) Veröffentlichungstag der Anmeldung: 28.07.2010
(73) Patentinhaber: Wisser, Joerg, 78112 St. Georgen (DE)
(72) Erfinder: Wisser, Joerg, 78112 St. Georgen (DE)
(74) Vertreter: Neunert, Peter Andreas
(86) Internationale Anmeldenummer: PCT/EP2008/008738
(87) Internationale Veröffentlichungsnummer: WO 2009/049882

(56) Entgegenhaltungen:
- DE-U1- 20 203 289
- JP-A- 3 074 685
- JP-A- 2006 144 920
- US-A1- 2001 032 957
- US-A1- 2002 145 126
- US-A1- 2003 066 981

## Beschreibung

Die Erfindung betrifft eine Wellenverbindung gemäß dem Oberbegriff des Patentanspruchs 1, wie sie aus der JP 2006 144920 A bekannt ist.

Der DE 43 30 819 A1 ist ganz allgemein eine Verbindung zwischen einer Dreh- oder Schwenkarmatur und einem Drehantrieb zu entnehmen, wobei ein äußeres Ende einer Armaturenwelle in ein Kupplungsteil der Ausgangswelle des Drehantriebs eingreift, wozu das äußere Ende der Armaturenwelle als Zweiflach ausgebildet ist und in eine entsprechende Ausnehmung formschlüssig eingreift.

Damit eine Kraftübertragung von dem Drehantrieb auf die Dreh- oder Schwenkarmatur stattfinden kann, ist ein entsprechender Formschluss nötig, was jedoch erfordert, dass die Achse der Armaturenwelle und die Achse der Welle des Drehantriebs exakt fluchten. Sind die beiden Wellen gegeneinander verkippt, ist ein Einsetzen des freien Endes der Armaturenwelle in das Kupplungsteil nicht möglich oder führt zu hohem Verschleiß in der Armatur, da die Neigung der Achsen der Wellen gegeneinander nicht ausgeglichen werden kann. Zudem kann die Armatur aufgrund des Verschleißes undicht werden.

Die gattungsgemäße JP 2006144920 A zeigt eine Wellenverbindung, bei der ein Achswinkelfehler ausgeglichen werden kann. Hierzu sind die beiden Wellenenden im Querschnitt aufeinander abgestimmt mit beispielsweise sechseckigen Konturen versehen, wobei ein erstes Wellenende mit einem entsprechenden axialen Endabschnitt in ein korrespondierendes Wellenende mit einer entsprechenden Aussparung eingreift und im Kontaktbereich ein Linienkontakt entsteht. Bei einer Drehbewegung wandert der Linienkontakt in axialer Richtung und kann auf diese Weise den Achswinkelfehler korrigieren. Obwohl eine derartige Wellenverbindung in der Lage ist, Achswinkelfehler auszugleichen, besteht weiterer Verbesserungsbedarf.

Die Aufgabe der Erfindung besteht daher darin, eine Wellenverbindung der eingangs genannten Art weiterzuentwickeln, bei der die Betätigung auch im Falle eines Achswinkelfehlers weiterhin mit vergleichsweise niedrigem Kraftaufwand sichergestellt ist und einen geringen Verschleiß aufweist.

Die Aufgabe wird erfindungsgemäß gelöst durch eine Wellenverbindung gemäß dem Patentanspruch 1.

Vorteilhafte Ausgestaltungen und Weiterbildungen der Erfindung sind in den Unteransprüchen angegeben.

Erfindungsgemäß ist wenigstens eine Seitenfläche des als Zweiflach ausgebildeten Innenprofils des Kupplungsteils, welches mit der zweiten Welle, welche vorzugsweise durch die Welle eines Drehantriebs gebildet ist, drehfest verbunden ist, in Längsrichtung der ersten Welle bzw. der zweiten Welle konvex ausgebildet. Eine derartig gewölbte Fläche erlaubt eine Kippbewegung der beiden Wellen gegeneinander, vorzugsweise eine Kippbewegung des Armaturenschafts gegenüber dem Kupplungsteil, durch welche es ermöglicht wird, nicht fluchtende Achsen der beiden Wellen bzw. nicht fluchtende Achsen von Armaturenschaft und Antriebswelle des Drehantriebs auszugleichen.

Vorzugsweise sind beide Seitenflächen des Innenprofils des Kupplungsteils in Längsrichtung konvex ausgebildet, wodurch größere Versätze zwischen den Wellen ausgelichen werden können.

Die konvexen Seitenflächen sind vorzugsweise als Teil einer Zylinderoberfläche ausgebildet, wobei die Achse des Zylinders senkrecht zur Längsachse des Armaturenschafts verläuft.

Besonders bevorzugt weist die konvexe Seitenfläche einen derartigen Krümmungsradius auf, dass ein Schwenken der Längsachse der ersten Welle, insbesondere des Armaturenschafts, in dem Kupplungsteil um etwa 1° bis 3°, vorzugsweise um etwa 1,5° bis 2° ermöglicht wird. Größere Neigungen der Achsen gegeneinander müssen in der Regel nicht ausglichen werden, sodass eine vergleichsweise schwache Wölbung der Seitenflächen bereits ausreicht, um das gewünschte Ergebnis zu erzielen.

Die Erfindung wird anhand der nachfolgenden Figuren ausführsich erläutert. Die in den Fig. 1a - c und 3a - c dargestellten Ausfuhrungsbeispiele sind nicht Gegenstand der Erfindung, sondern sollen das Verstandnis der Erfindung erleichtern. Es zeigt
- Fig. 1a: einen Axialschnitt durch ein Ausführungsbeispiel aus dem Stand der Technik mit einem Küken und einem Kupplungsteil,
- Fig. 1b: einen weiteren Axialschnitt durch das Ausführungsbeispiel gemäß Figur 1a,
- Fig. 1c: eine Draufsicht auf das Küken gemäß Figur 1a,
- Fig. 2b: einen Axialschnitt durch ein erstes Ausführungsbeispiel der Erfindung mit einem Küken und einem Krupplungsteil,

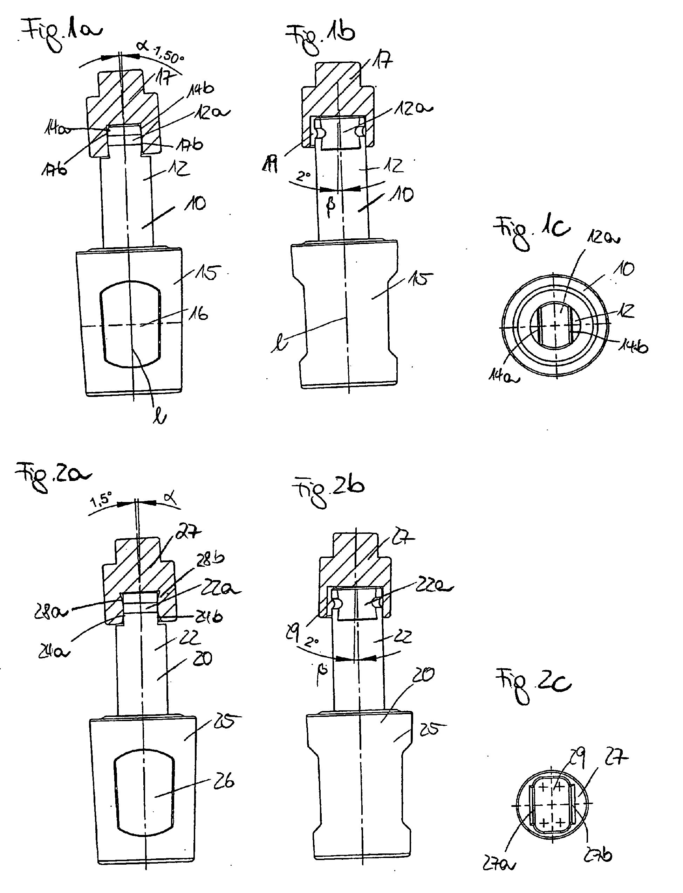

- Fig. 2b: einen weiteren Axialschnitt durch das Ausführungsbeispiel gemäß Figur 2a,
- Fig. 2c: eine Draufsicht auf das Kupplungsteil gemäß Figur 2a,

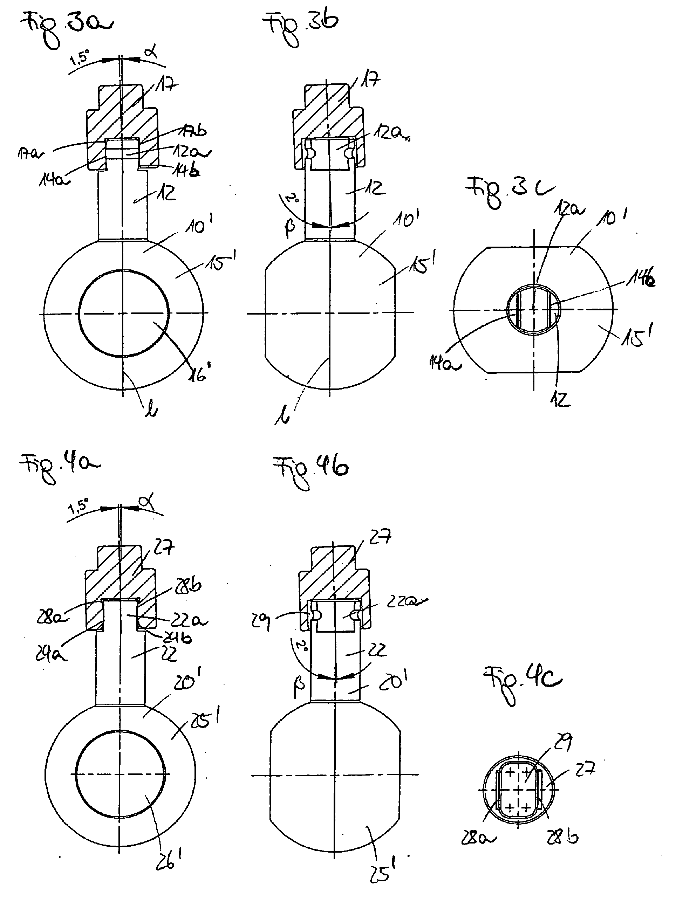

- Fig. 3a: einen Axialschnitt durch ein weiteres Ausführungsbeispiel aus dem Stand der Technik mit einem Küken und einem Kupplungsteil,
- Fig. 3b: einen weiteren Axialschnitt des Ausführungsbeispiels gemäß Figur 3a,
- Fig. 3c: eine Draufsicht auf das Küken gemäß Figur 3a,
- Fig. 4a: einen Axialschnitt durch ein zweites Ausführungsbeispiel der Erfindung mit einem Küken und einem Kupplungsteil,
- Fig. 4b: einen weiteren Axialschnitt durch das Ausführungsbeispiel gemäß Figur 4a und
- Fig. 4c: eine Draufsicht auf das Kupplungsteil gemäß Figur 4a.

In den Figuren 1a, 1b und 1c ist ein Ausführungsbeispiel aus dem Stand der Technik mit einem Küken 10 und einem Kupplungsteil 17 dargestellt. Das Küken 10 weist einen Grundkörper 15 und einen daran angeordneten Armaturenschaft 12 auf, wobei der Armaturenschaft 12 im Wesentlichen zylindrisch ausgebildet ist und eine Längsachse 1 des Küken 10 definiert. Der Grundkörper 15 ist kegelförmig ausgebildet und weist eine Durchgangsöffnung 16 auf, sodass das Küken 10 ein Kegelküken bildet.

Der Armaturenschaft 12 weist ein freies Ende 12a auf, welches durch das von dem Grundkörper 15 abgewandte Ende des Armaturenschafts 12 gebildet ist. Das freie Ende 12 weist ein Außenprofil auf, welches als Zweiflach mit zwei Seitenflächen 14a, 14b ausgebildet ist. Die beiden Seitenflächen 14a, 14b sind jeweils konvex gewölbt, beispielsweise derart, dass sie einen Teil einer Zylinderoberfläche bilden, wobei der Zylinder derart angeordnet ist, dass die Achse des Zylinders senkrecht zur Längsachse 1 des Küken 10 steht. Die Seitenflächen 14a, 14b müssen dabei nicht zwingender Weise auf der Oberfläche eines einzigen Zylinders liegen. Die Seitenflächen 14a, 14b sind dabei derart ausgestaltet, dass für jeden Querschnitt durch das freie Ende 12a des Armaturenschafts 12 die Schnittlinien auf den Seitenflächen 14a, 14b parallel zueinander verlaufen. Da die Seitenflächen 14a, 14b jedoch gewölbt sind und zwar, da sie an dem freien Ende 12a einander gegenüberliegen, jeweils nach außenliegend und somit entgegengesetzt gewölbt sind, verlaufen die Seitenflächen 14a, 14b nicht exakt parallel zueinander. Der Krümmungsradius der Seitenflächen 14a, 14b ist dabei deutlich größer gewählt als der Abstand der Seitenflächen 14a, 14b von der Längsachse 1, so dass sich eine vergleichsweise flache Wölbung der Seitenflächen 14a, 14b ergibt.

Das freie Ende 12a des Armaturenschafts 12 greift in eine Ausnehmung 19 eines Kupplungsteils 17 ein. Die Ausnehmung 19 weist dabei ein Innenprofil auf, welches als Zweiflach mit zwei einander gegenüberliegenden Seitenflächen 18a, 18b ausgebildet. Die Seitenflächen 18a, 18b sind eben ausgebildet und verlaufen parallel zueinander. An den Seitenflächen 18a, 18b können die Seitenflächen 14a, 14b des freien Endes 12a des Armaturenschafts 12 anliegen, wobei jedoch auf Grund der Krümmung der Seitenflächen 14a, 14b des freien Endes 12a kein flächiger Kontakt zwischen den beiden Seitenflächenpaaren 14a, 14b; 18a, 18b erfolgt. Durch die Krümmung der Seitenflächen 14a, 14b des freien Endes 12a ist es möglich, das Küken 10 in der Ausnehmung 19 des Kupplungsteils 17 um einen geringen Winkel α wie in Figur 1a dargestellt zu kippen. Der Winkel α kann beispielsweise etwa 1,5,° betragen. In der in Figur 1b dargestellten Schnittebene, welche senkrecht zu der in Figur 1a dargestellten Schnittebene des Ausführungsbeispiels der Erfindung liegt, ist ersichtlich, dass, da die Breite der Ausnehmung 19 größer ist als die Breite des freien Endes 12a, weiterhin eine Schwenkbewegung der Längsachse 1 gegenüber dem Kupplungsteil 17 um einen Winkel β möglich ist, welcher beispielsweise etwa 2° beträgt.

Die Verbindung zwischen dem Kupplungsteil 17 und dem Armaturenschaft 12 des Kükens 10 stellt eine Wellenverbindung dar, über welche es möglich ist, das Küken 10 um seine Längsachse 1 über einen nicht dargestellten Drehantrieb, dessen Antriebswelle drehfest mit dem Kupplungsteil 17 verbunden ist, zu drehen. Das Küken 10 ist dabei in einem nicht dargestellten Kükenhahn oder einer sonstigen Dreh- oder Schwenkarmatur angeordnet. Geringe Versätze zwischen der Längsachse 1 des Kükens 10 und der Längsachse der Antriebswelle des Drehantriebs können durch die erfindungsgemäße Ausgestaltung des freien Endes 12a des Armaturenschafts 12 des Kükens 10 ausgeglichen werden.

In den Figuren 2a, 2b und 2c ist ein erstes Ausführungsbeispiel der Erfindung mit einem Küken 20 und einem Kupplungsteil 27 dargestellt. Das Küken 20 weist einen Grundkörper 25 und einen daran angeordneten Armaturenschaft 22 auf, wobei der Armaturenschaft 22 im Wesentlichen zylindrisch ausgebildet ist und die Längsachse 1 des Küken 20 definiert. Der Grundkörper 25 ist kegelförmig ausgebildet, sodass das Küken 20 ein Kegelküken bildet, und weist eine Durchgangsöffnung 26 auf.

Der Armaturenschaft 22 weist ein freies Ende 22a auf, welches durch das von dem Grundkörper 25 abgewandte Ende des Armaturenschafts 22 gebildet ist. Das freie Ende 22 weist ein Außenprofil auf, welches als Zweiflach mit zwei Seitenflächen 24a, 24b ausgebildet ist. Die Seitenflächen 24a, 24b verlaufen dabei parallel zueinander und sind eben ausgebildet.

Das freie Ende 22a des Armaturenschafts 22 greift in eine Ausnehmung 29 eines Kupplungsteils 27 ein. Die Ausnehmung 29 weist dabei ein Innenprofil auf, welches als Zweiflach mit zwei einander gegenüberliegenden Seitenflächen 28a, 28b ausgebildet. Die beiden Seitenflächen 28a, 28b sind jeweils konvex gewölbt, beispielsweise derart, dass sie einen Teil einer Zylinderoberfläche bilden, wobei der Zylinder derart angeordnet ist, dass die Achse des Zylinders senkrecht zur Längsachse der Antriebswelle des Drehantriebs, welche in einem exakt ausgerichteten System parallel zur Längsachse 1 des Küken 20 verläuft, steht. Die Seitenflächen 28a, 28b sind dabei derart ausgestaltet, dass für jeden Querschnitt durch das Kupplungsteil 27 die Schnittlinien auf den Seitenflächen 28a, 28b parallel zueinander verlaufen. Da die Seitenflächen 28a, 28b jedoch gewölbt sind und zwar in entgegengesetzte Richtung, da sie einander gegenüberliege Seitenflächen 28a, 28b der Ausnehmung 29 bilden, verlaufen die Seitenflächen 28a, 28b nicht exakt parallel zueinander. Der Krümmungsradius der Seitenflächen 28a, 28b ist dabei deutlich größer gewählt als der Abstand der Seitenflächen 28a, 28b von der Längsachse 1, so dass sich eine vergleichsweise flache Wölbung der Seitenflächen 28a, 28b ergibt.

Die Figur 2c zeigt dabei eine Draufsicht auf die Ausnehmung 29 des Kupplungsteils 27, aus welcher ersichtlich ist, dass die Ausnehmung 29 im Wesentlichen quaderförmig und als Zweiflach ausgebildet ist, wobei die beiden Längsseitenflächen 28a, 28b konvex gewölbt sind.

An den Seitenflächen 28a, 28b können die Seitenflächen 24a, 24b des freien Endes 22a des Armaturenschafts 22 anliegen, wobei jedoch auf Grund der Krümmung der Seitenflächen 28a, 28b des Kupplungsteils 27 kein flächiger Kontakt zwischen den beiden Seitenflächenpaaren 24a, 24b; 28a, 28b erfolgt. Durch die Krümmung der Seitenflächen 28a, 28b des Kupplungsteils 27 ist es möglich, das Küken 20 in der Ausnehmung 29 des Kupplungsteils 27 um einen geringen Winkel α wie in Figur 2a dargestellt zu kippen. Der Winkel α kann beispielsweise etwa 1,5,° betragen. In der in Figur 2b dargestellten Schnittebene, welche senkrecht zu der in Figur 2a dargestellten Schnittebene des Ausführungsbeispiels der Erfindung liegt, ist ersichtlich, dass, da die Breite der Ausnehmung 29 größer ist als die Breite des freien Endes 22a, weiterhin eine Schwenkbewegung der Längsachse 1 gegenüber dem Kupplungsteil 27 um einen Winkel β möglich ist, welcher beispielsweise etwa 2° beträgt.

Die Verbindung zwischen dem Kupplungsteil 27 und dem Armaturenschaft 22 des Kükens 10 stellt eine Wellenverbindung dar, über welche es möglich ist, das Küken 20 um seine Längsachse 1 über einen nicht dargestellten Drehantrieb, dessen Antriebswelle drehfest mit dem Kupplungsteil 27 verbunden ist, zu drehen. Das Küken 20 ist dabei in einem nicht dargestellten Kükenhahn oder einer sonstigen Dreh- oder Schwenkarmatur angeordnet. Geringe Versätze zwischen der Längsachse 1 des Kükens 20 und der Längsachse der Antriebswelle des Drehantriebs können durch die erfindungsgemäße Ausgestaltung des Kupplungsteils 27 ausgeglichen werden.

Die Figuren 3a, 3b und 3c zeigen ein weiteres Ausführungsbeispiel aus dem Stand der Technik, welches zu großen Teilen dem Ausführungsbeispiel gemäß den Figuren 1a, 1b und 1c entspricht, sodass gleiche Teile mit gleichen Bezugsziffern bezeichnet sind. Das weitere Ausführungsbeispiel weist ein Küken 10' auf, welches sich von dem Küken 10 gemäß dem ersten Ausführungsbeispiel lediglich in der Ausgestaltung seines Grundkörpers 15' unterscheidet, welcher im vorliegenden dritten Ausführungsbeispiel kugelförmig ausgebildet ist, sodass das Küken 10' als Kugelküken ausgebildet ist. Der Grundkörper 15' weist dabei eine Durchgangsöffnung 16' auf, welchen beispielsweise als- zylindrische Durchgangsbohrung durch den Grundkörper 15' ausgebildet sein kann.

In den Figuren 4a, 4b und 4c ist ein zweites Ausführungsbeispiel der Erfindung dargestellt, welches größtenteils identisch mit dem in den Figuren 2a, 2b und 2c dargestellten Ausführungsbeispiel ist, sodass gleiche Teile mit gleichen Bezugsziffern bezeichnet sind. Das zweite Ausführungsbeispiel weist ein Küken 20' auf, welches sich von dem in den Figuren 2a bis 2c dargestellten Küken 20 lediglich durch die Ausgestaltung seines Grundkörpers 25' unterscheidet. Das Küken 20' weist einen Grundkörper 25' mit einer Durchgangsöffnung 26' auf, welcher kugelförmig ausgebildet ist, sodass wiederum ein Kugelküken gebildet ist.

### Bezugszeichenliste

- 10: Küken
- 10': Küken
- 12: Armaturenschaft
- 12a: freies Ende
- 14a: Seitenfläche
- 14b: Seitenfläche
- 15: Grundkörper
- 15': Grundkörper
- 16: Durchgangsöffnung
- 16': Durchgangsöffnung
- 17: Kupplungsteil
- 18a: Seitenfläche
- 18b: Seitenfläche
- 19: Ausnehmung

- 20: Küken
- 20': Küken
- 22: Armaturenschaft
- 22a: freies Ende
- 24a: Seitenfläche
- 24b: Seitenfläche
- 25: Grundkörper
- 25': Grundkörper
- 26: Durchgangsöffnung
- 26': Durchgangsöffnung
- 27: Kupplungsteil
- 28a: Seitenfläche
- 28b: Seitenfläche
- 29: Ausnehmung

- l: Längsachse
- α: Winkel
- β: Winkel

## Patentansprüche

1. Wellenverbindung zwischen einer ersten Welle und einer zweiten Welle, wobei die erste Welle
- eine Längsachse (1) aufweist, um welche die erste Welle drehbar ist,
- als Armaturenschaft (22) einer Dreh- oder Schwenkarmatur ausgebildet ist, und
- ein freies Ende (22a) aufweist, welches in ein Kupplungsteil (27) eingreift, welches mit der zweiten Welle drehfest verbindbar ist,
wobei das freie Ende (22a) der ersten Welle mit einem Außenprofil versehen ist, welches in ein Innenprofil des Kupplungsteils (27) lösbar eingreift, wobei das Außenprofil als zweiflach mit zwei im wesentlichen parallel zueinander verlaufenden Seitenflächen (24a, 24b, 28a, 28b) ausgebildet ist, und die zweite Welle als Welle eines Drehantriebs ausgebildet ist,
**dadurch gekennzeichnet, dass** wenigstens eine Seitenfläche (28a, 28b) des Innenprofils in Längsrichtung der ersten Welle bzw, der zweiten Welle konvex ausgebildet ist.

2. Wellenverbindung nach Anspruch 1,
**dadurch gekennzeichnet, dass** die beiden beiden Seitenflächen (28a, 28b) des Innenprofils in Längsrichtung (22) konvex ausgebildet sind.

3. Wellenverbindung nach einem der Ansprüche 1 oder 2,
**dadurch gekennzeichnet, dass** wenigstens eine Seitenfläche (24a, 24b, 28a, 28b) als Teil einer Zylinderoberfläche ausgebildet ist, wobei die Achse des Zylinders senkrecht zur Längsachse (l) des Armaturenschafts (22) verläuft.

4. Wellenverbindung nach einem der vorhergehenden Ansprüche
**dadurch gekennzeichnet, dass** die konvexe Seitenfläche (24a, 24b, 28a, 28b) einen derartigen Krümmungsradius aufweist, dass ein Schwenken der Längsachse (1) der ersten Welle in dem Kupplungsteil (27) um etwa 1° bis 3°, vorzugsweise um etwa 1,5° bis 2° ermöglicht wird.

## Claims

1. A shaft connection between a first shaft and a second shaft, wherein the first shaft
- has a longitudinal axis (1) about which the first shaft is rotatable,
- is designed in the form of a shaft (22) of a rotary or swivel valve, and
- has a free end (22a) which engages in a coupling part (27) which is capable of being connected in a rotationally fixed manner to the second shaft,
- wherein the free end (22a) of the first shaft is provided with an external profile which engages in a releasable manner in an internal profile of the coupling part (27), wherein the external profile is designed in the form of a dihedron with two lateral faces (24a, 24b, 28a, 28b) extending substantially parallel to each other, and the second shaft is designed in the form of a shaft of a rotary drive, **characterized in that** at least one lateral face (28a, 28b) of the internal profile is made convex in the longitudinal direction of the first shaft or the second shaft respectively.

2. A shaft connection according to claim 1, **characterized in that** the two lateral faces (28a, 28b) of the internal profile are made convex in the longitudinal direction (22).

3. A shaft connection according to one of claims 1 or 2, **characterized in that** at least one lateral face (24a, 24b, 28a, 28b) is designed in the form of part of a cylinder surface, wherein the axis of the cylinder extends at a right angle to the longitudinal axis (1) of the valve shaft (22).

4. A shaft connection according to any one of the preceding claims, **characterized in that** the convex lateral face (24a, 24b, 28a, 28b) has a radius of curvature such that pivoting of the longitudinal axis (1) of the first shaft in the coupling part (27) by approximately from 1° to 3°, preferably by approximately from 1.5° to 2°, is made possible.

## Revendications

1. Liaison d'arbres entre un premier arbre et un second arbre,
* le premier arbre :
- ayant un axe longitudinal (1) autour duquel il peut tourner,
- il est réalisé comme tige d'armature (22) d'une armature pivotante ou basculante, et
- il comporte une extrémité libre (22a) qui pénètre dans une pièce de couplage (27) reliée solidairement en rotation au second arbre,
- l'extrémité libre (22a) du premier arbre étant munie d'un profil extérieur qui pénètre de manière amovible dans un profil intérieur de la pièce de couplage (27),
- le profilé extérieur étant réalisé avec deux aplats constitués par des surfaces latérales (24a, 24b, 28a, 28b) essentiellement parallèles l'une par rapport à l'autre et le second arbre est réalisé comme arbre d'un entraînement en rotation,
liaison **caractérisée en ce qu'**
au moins une surface latérale (28a, 28b) du profil intérieur est réalisée avec une forme convexe dans la direction longitudinale du premier arbre ou du second arbre.

2. Liaison d'arbres selon la revendication 1,
**caractérisée en ce que**
les deux surfaces latérales (28a, 28b) du profil intérieur sont de forme convexe dans la direction longitudinale (22).

3. Liaison d'arbres selon l'une des revendications 1 ou 2,
**caractérisée en ce qu'**
au moins une surface latérale (24a, 24b, 28a, 28b) est réalisée comme partie d'une surface supérieure cylindrique,
l'axe du cylindre étant perpendiculaire à l'axe longitudinal (1) de la tige d'armature (22).

4. Liaison d'arbres selon l'une des revendications précédentes,
**caractérisée en ce que**
la surface latérale convexe (24a, 24b, 28a, 28b) a un rayon de courbure qui permet un basculement de l'axe longitudinal (1) du premier arbre dans la pièce de couplage (27) selon un angle de l'ordre de 1° à 3°, de préférence d'environ 1,5° à 2°.
